# EUROPÄISCHE PATENTSCHRIFT

(11) **EP 2 853 877 B1**
(45) Veröffentlichungstag und Bekanntmachung des Hinweises auf die Patenterteilung: **09.11.2016**
(21) Anmeldenummer: 14182767.5
(22) Anmeldetag: 29.08.2014
(51) Int. Cl.: G01M 13/04, B29B 9/06

(54) **System und Verfahren zum Bereitstellen von Diagnosedaten zu einer Messerwalzenvorrichtung eines Kunststoffstranggranulators**
System and method for providing diagnostic data to a knife rolling device of a plastic strand granulator
Système et procédé de mise à disposition de données de diagnostic pour un porte-couteaux d'un granulateur de plastique

(30) Priorität: 24.09.2013 DE 102013110560
(43) Veröffentlichungstag der Anmeldung: 01.04.2015
(73) Patentinhaber: Reduction Engineering GmbH, 70825 Korntal-Münchingen (DE)
(72) Erfinder: Fischer, Jochen, 09125 Chemnitz (DE); Zollitsch, Ludwig, 70825 Korntal-Münchingen (DE); Kreuz, Ulrich, 71729 Erdmannhausen (DE)
(74) Vertreter: Klunker . Schmitt-Nilson . Hirsch

(56) Entgegenhaltungen:
- EP-A1- 0 972 622
- EP-A2- 1 398 636
- WO-A1-93/18897
- DE-A1-102007 016 347
- US-A- 5 571 966
- US-A1- 2005 155 429
- US-A1- 2012 109 580

## Beschreibung

Die Erfindung betrifft ein Verfahren und ein System zum Bereitstellen von Diagnosedaten zu einer Messerwalzenvorrichtung eines Kunststoffstranggranulators. Das System umfasst eine Messerwalzenvorrichtung mit einer Messerwalze und mindestens einem Messerwalzenlager.

Aus der deutschen Offenlegungsschrift DE 42 36 451 C1 ist eine Granuliervorrichtung für Strangmaterialien bekannt, welche eine rotierende Schermesserwalze sowie eine untere und obere Einzugswalze umfasst. Zur Vereinfachung von Reinigungs-, Wartungs- und Instandhaltungsarbeiten ist vorgesehen, die Schermesserwalze und/ oder die untere Einzugswalze bewegbar auszuführen. Dadurch lässt sich der wartungsbedingte Ausbau der Schermesserwalze, beispielsweise für das regelmäßige Nachschleifen der Schermesser, einfacher realisieren.

Üblicherweise wird die Messerwalzenvorrichtung insgesamt, das heißt einschließlich der äußeren Lagerschalen des Messerwalzenlagers, aus dem Granulator herausgehoben. Dies erfolgt entweder zu Wartungszwecken der Messerwalze, wenn diese nachgeschliffen oder repariert werden muss, oder im Falle eines Lagerschadens zum Zwecke des Austauschs des defekten Lagers. Die Wartung der Kunststoffstranggranuliervorrichtung erfolgt üblicherweise extern durch den Hersteller der Vorrichtung oder durch einen von diesem autorisierten Dienstleister.

Die DE 10 2007 016 347 A1 betrifft ein Verfahren und eine Vorrichtung zur Herstellung von Kunststoffgranulat, mit einem Granulator, welcher eine Schneideinrichtung umfasst, deren Schneidorgane beim Zerteilen des Kunststoffs am Kunststoffmassestrom zum Eingriff kommen. Die Vorrichtung umfasst zumindest einen Schwingungssensor, mit dem an der Vorrichtung, insbesondere am Granulator, auftretende Schwingungen erfasst werden können.

Die WO 93/18897 A1 und die EP 0 972 622 A1 beschreiben jeweils die Möglichkeit des Einstellens eines Spaltes zwischen einer Düsenplatte einer Extrudiervorrichtung und einer Messereinrichtung mit Hilfe eines Sensors, welcher eingerichtet ist, Schwingungen der Düsenplatte zu erfassen.

Die EP 1 398 636 A2 beschreibt allgemein mit Bezug auf ein Wälzlager ein Sensormodul, welches innerhalb der Umgebung des Lagers angeordnet ist und Bedingungen erfassen kann, wie z.B. Geschwindigkeit, Temperatur und Vibration, unter denen das Wälzlager arbeitet.

Aufgabe der vorliegenden Erfindung ist es, die Wartung von Kunststoffstranggranulatoren zu optimieren.

Diese Aufgabe wird durch ein Verfahren sowie ein System zur Durchführung des Verfahrens mit den Merkmalen der unabhängigen Ansprüche gelöst. In davon abhängigen Ansprüchen sind vorteilhafte Ausgestaltungen und Weiterbildungen der Erfindung angegeben.

Wesentlich für die vorliegende Erfindung ist zunächst, dass mindestens ein Sensor vorgesehen ist, Schwingungen der Messerwalzenvorrichtung zu erfassen. Die erfassten Schwingungen sind charakteristisch für den Verschleißzustand des mindestens einen Messerwalzenlagers der Messerwalzenvorrichtung. Die erfassten Schwingungssignale werden dann mittels einer Speichereinrichtung in Form von Diagnosedaten gespeichert, so dass sie nach einem Ausbau der Messerwalzenvorrichtung aus dem Kunststoffstranggranulator bei einer Wartung zur Verfügung stehen.

Anders als im Stand der Technik steht einem Wartungsdienst für Messerwalzenvorrichtungen also nicht nur die nachzuschleifende Messerwalzenvorrichtung mit einem unbekannten Verschleißzustand der Messerwalzenlager zur Verfügung, sondern auch die gespeicherten Diagnosedaten, die indirekt Auskunft über den Verschleißzustand der Lager geben.

Die gespeicherten Diagnosedaten liegen vorzugsweise zunächst in einer Form vor, die im Wesentlichen einer Transformation der erfassten Schwingungssignale zum Zwecke der bloßen Speicherung für eine spätere Auswertung entspricht. Die Auswertung der Diagnosedaten erfolgt dann erst durch einen Wartungsdienst, welcher die Diagnosedaten mittels einer Analyseeinrichtung verarbeitet, um den Verschleißzustand der Lager zu bestimmen.

Während gemäß dem Stand der Technik ein Feststellen des Verschleißzustandes entweder unterbleibt und so das Risiko eines späteren Ausfalls der Messerwalzenvorrichtung besteht oder auf Verdacht hin ein möglicherweise intaktes Lager zerlegt oder ersetzt wird, ist mit dem erfindungsgemäßen System ein Feststellen des Verschleißzustandes zu jedem Zeitpunkt möglich und kann bei der Wartung der Messerwalze berücksichtigt werden, so dass das oder die Lager im Bedarfsfall gleich mit gewartet werden können.

In einem bevorzugten Ausführungsbeispiel der Erfindung ist die Speichereinrichtung Teil der Messerwalzenvorrichtung. Das ist insofern vorteilhaft, weil der Wartungsdienst die gespeicherten Diagnosedaten gemeinsam mit der dazu gehörigen Messerwalzenvorrichtung erhält.

In anderen Ausführungsbeispielen, in denen die Speichereinrichtung nicht Teil der Messerwalzenvorrichtung ist, kann der Wartungsdienst Zugriff auf die Diagnosedaten über eine Maschinenschnittstelle mit Netzwerkverbindung oder über einen externen Datenspeicher erhalten, auf dem die Diagnosedaten gespeichert sind und der anlässlich der Wartung ebenfalls übergeben wird.

In Ausführungsformen, in denen die Analyseeinrichtung Teil des erfindungsgemäßen Systems ist, können die bereits ausgewerteten Diagnosedaten in der Speichereinrichtung gespeichert werden, sodass der Verschleißzustand der Lager durch Auslesen der Speichereinrichtung unmittelbar festgestellt werden kann.

Die für das Bereitstellen der Diagnosedaten erforderlichen Messungen finden im Leerlauf der Messerwalze statt und werden bevorzugt vor oder nach dem regulären Betrieb des Kunststoffstranggranulators, also insbesondere im Zuge des Einschaltvorganges oder des Ausschaltvorganges der Messerwalzenvorrichtung vorgenommen. Die Messungen finden unter definierten Bedingungen statt, was insbesondere die Messdauer, die Messdrehzahl und/oder die Abtastfrequenz des gemessenen Signals betreffen kann. Das System umfasst dazu vorzugsweise eine Steuereinrichtung. Diese ist beispielsweise eingerichtet, das Erfassen der Schwingungen durch den Sensor im Leerlauf der Messerwalze zu initiieren, insbesondere im Leerlauf bei einer oder mehreren definierten Messdrehzahlen oder Messdrehzahlbereichen der Messerwalze und/ oder im Zuge des Einschaltvorganges oder des Ausschaltvorganges der Messerwalzenvorrichtung.

Zum Kalibrieren der Analyseeinrichtung werden unter den gleichen definierten Bedingungen Referenz-Diagnosedaten baugleicher und voll funktionstüchtiger Messerwalzenlager ermittelt. Die Analyseeinrichtung ist anhand dieser Referenz-Diagnosedaten in der Lage, durch Vergleichen der Diagnosedaten von aktuell im Einsatz befindlichen Messerwalzenlager mit den Referenz-Diagnosedaten Unterschiede festzustellen, die über den Verschleißzustand des Lagers Auskunft geben. Im Zuge des Kalibrierens werden eine Vielzahl von Diagnosedaten von Messerwalzenlagern mit unterschiedlichen, aber bekannten Verschleißzuständen erfasst und diese mit den Referenz-Diagnosedaten verglichen und charakteristische Unterschiede dem jeweiligen Verschleißzustand zugeordnet. Anhand dieser Daten ist die Analyseeinrichtung in der Lage, präzise Auskunft über den Verschleißzustand von Lagern anhand von vorliegenden Diagnosedaten zu geben.

Nachfolgend wird die Erfindung beispielhaft anhand der begleitenden Zeichnungen erläutert. Darin zeigen:
- Figur 1: ein System gemäß einem bevorzugten Ausführungsbeispiel der Erfindung und
- Figur 2: einen Kunststoffstranggranulator mit einem erfindungsgemäßen System in schematischer Seitenansicht.

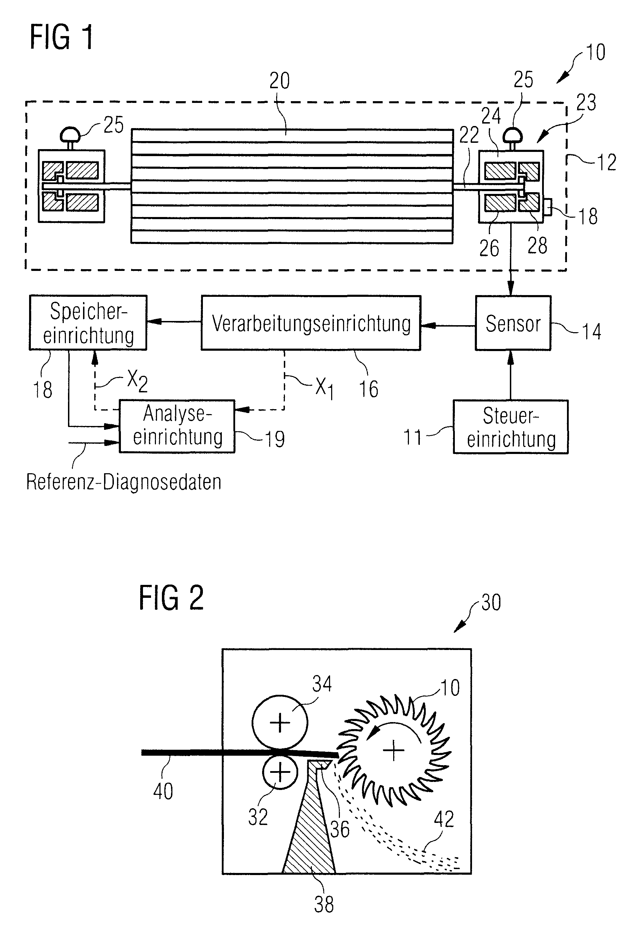

Dargestellt in Figur 1 ist ein System 10 zum Bereitstellen von Diagnosedaten zu einer Messerwalzenvorrichtung eines Kunststoffstranggranulators 30 gemäß einem bevorzugten Ausführungsbeispiel. Das System 10 umfasst eine Messerwalzenvorrichtung 12, einen Sensor 14 zum Erfassen von Schwingungen, eine Steuereinrichtung 11, die eingerichtet ist, das Erfassen der Schwingungen durch den Sensor im Leerlauf der Messerwalze zu initiieren, eine Verarbeitungseinrichtung 16, die geeignet ist, die vom Sensor 14 erfassten Schwingungssignale in Diagnosedaten zu wandeln, und eine Speichereinrichtung 18, die geeignet ist, die von der Verarbeitungseinrichtung 16 gewandelten Diagnosedaten zu speichern.

Die Messerwalzenvorrichtung 12 umfasst eine Messerwalze 20, die auf einer Welle 22 angeordnet ist. Die Welle 22 ist an beiden Enden in einem Messerwalzenlager 23 gelagert. In einigen Ausführungsformen ist die Welle 22 nur an einem Ende in einem Messerwalzenlager 23 gelagert. Das Messerwalzenlager 23 umfasst ein Lagergehäuse 24 mit einem Radiallager 26. In manchen Ausführungsformen beinhaltet das Messerwalzenlager 23 zusätzlich ein Axiallager 28. In einigen Ausführungsformen ist am Lagergehäuse 24 eine Augenschraube 25 angeordnet, an der die Messerwalzenvorrichtung 12 aus dem Kunststoffstranggranulator 30 herausgezogen werden kann.

Der Sensor 14 ist solcherart angeordnet, dass er in der Lage ist, Schwingungen des zugeordneten Messerwalzenlagers 23 zu erfassen, wenn die Messerwalze 20 rotiert. In einigen Ausführungsformen ist der Sensor 14 in der Nähe des zugeordneten Messerwalzenlagers 23 angeordnet. In einigen Ausführungsformen befindet sich der Sensor 14 außerhalb des Lagergehäuses 24 und ist somit nicht Teil der Messerwalzenvorrichtung 12. In anderen Ausführungsformen ist der Sensor 14 im Lagergehäuse 24 angeordnet und somit Teil der Messerwalzenvorrichtung 12. In manchen Ausführungsformen wird der Sensor 14 direkt am zugeordneten Messerwalzenlager 23 befestigt.

In einigen Ausführungsformen ist jedem Radial- oder Axiallager 26, 28 des Messerwalzenlagers 23 ein eigener Sensor 14 zugeordnet, der die vom jeweiligen Lager erzeugten Schwingungen aufnimmt. In anderen Ausführungsformen ist nur dem Radiallager 26 oder nur dem Axiallager 28 ein eigener Sensor 14 zugeordnet, während das andere Lager nicht direkt durch zugeordnete Sensoren überwacht werden.

In manchen Ausführungsformen erfolgt eine Messung der Schwingungssignale mehrerer Einzellager 26, 28 des Messerwalzenlagers 23 über einen gemeinsamen Sensor 14, der solcherart angeordnet ist, dass er in der Lage ist, die Schwingungen der mehreren Einzellager 26, 28 gleichzeitig zu erfassen. Beispielsweise können einem Radiallager 26 und einem Axiallager 28 ein gemeinsamer Sensor 14 zugeordnet werden, wobei eine isolierte Betrachtung der unterschiedlichen Lager 26, 28 wegen deren unterschiedlicher Schwingungscharakteristika trotz gemeinsamer Messung möglich ist, indem aus dem Gesamtsignal die den Einzellagern zuzuordnenden Signalanteile herausgefiltert werden.

In einigen Ausführungsformen ist der Sensor 14 ein Schwingungssensor, der über eine Temperaturbeständigkeit von mindestens 100 °C verfügen kann. Bei dem mindestens einen Sensor 14 handelt es sich beispielsweise um ein Mikrofon, einen Beschleunigungssensor, ein LVDT oder ein Vibrometer. Der Sensor 14 erfasst die Schwingungen an der Sensoroberfläche und wandelt diese in Schwingungssignale, die bevorzugt als elektrische Signale vorliegen.

Der Sensor 14 ist mit der Verarbeitungseinrichtung 16 verbunden, welche die Schwingungssignale verarbeitet. In einigen Ausführungsformen werden die elektrischen Signale des Sensors 14 mittels eines Analog-Digital-Wandlers in digitale Signale gewandelt, die als Diagnosedaten zur weiteren Verarbeitung zur Verfügung stehen. Die Funktion der Verarbeitungseinrichtung 16 umfasst somit das Aufbereiten des Sensorsignals zum Zwecke der Speicherung in einer Speichereinrichtung 18. In einigen Ausführungsformen ist die Speichereinrichtung 18, wie dargestellt, Teil der Messerwalzenvorrichtung 12. Zusätzlich oder gegebenenfalls nur alternativ kann auch die Verarbeitungseinrichtung 16 Teil der Messerwalzenvorrichtung 12 sein. So können die Verarbeitungseinrichtung 16 und die Speichereinrichtung 18 z.B. als CPU und EEPROM in einem Mikrochip integriert sein.

Das System 10 ist dazu eingerichtet, Schwingungen im Leerlauf der Messerwalze 20 zu erfassen, um die Messung von Betriebsstörgrößen frei zu halten. In einigen Ausführungsformen erfolgt das Erfassen der Schwingungen bei einer definierten Messdrehzahl, beispielsweise bei 500 Umdrehungen pro Minute.

In anderen Ausführungsformen wird anstelle einer vorgegebenen Messdrehzahl ein vorgegebener Messdrehzahlbereich durchlaufen, bei dem das Erfassen der Schwingungen erfolgt, beispielsweise im Bereich von 400 bis 600 Umdrehungen pro Minute. In wiederum anderen Ausführungsformen findet das Erfassen der Schwingungen während unterschiedlicher Messdrehzahlen bzw. Messdrehzahlbereiche statt. In einigen Ausführungsformen finden Messprofile Anwendung, in der zu bestimmten Zeitpunkten während der Messung eine vorgegebene Messdrehzahl zur Anwendung kommt.

Vorzugsweise liegt die Messdrehzahl bzw. der Messdrehzahlbereich unterhalb einer Betriebsdrehzahl der Messerwalze 20. Dazu kann die Messung regelmäßig vor Erreichen und/oder nach Verlassen der Betriebsdrehzahl durchgeführt werden. Die Messdrehzahl kann in einigen Ausführungsbeispielen einen vorgegebenen Anteil der Betriebsdrehzahl betragen, beispielsweise 50%. In anderen Ausführungen kann die Messdrehzahl aber auch der Betriebsdrehzahl entsprechen. Es ist auch nicht ausgeschlossen, dass die Messdrehzahl oberhalb der Betriebsdrehzahl liegt. Je nach den zu erwartenden Schwingungscharakteristiken kann auch das zweckmäßig sein. In einigen Ausführungsformen beträgt die Betriebsdrehzahl 300 bis 2.500 Umdrehungen pro Minute betragen, beispielsweise 1.000 Umdrehungen pro Minute.

In einigen Ausführungsformen findet das Erfassen der Schwingungen während eines Einschaltvorgangs der Messerwalzenvorrichtung 12 statt, wobei die aktuelle Drehzahl beim Erreichen der einen oder mehreren Messdrehzahlen bzw. Messdrehzahlbereiche gegebenenfalls auf der jeweiligen Messdrehzahl gehalten wird und/oder die Messdrehzahlbereiche durchlaufen werden, sodass der Sensor 14 die Schwingungen erfassen kann. Nach Abschluss der Messung ändert die Messerwalzenvorrichtung 12 die aktuelle Drehzahl von der Messdrehzahl auf die gewünschte Betriebsdrehzahl. Diese Ausgestaltung ist insbesondere dann vorteilhaft, wenn die Messdrehzahl unterhalb der Betriebsdrehzahl liegt, weil dadurch die Messung während des Hochfahrens der Maschinevorgenommen werden kann, wobei das Hochfahren im Wesentlichen nur durch die Messdauer verlängert wird.

In anderen Ausführungsformen findet das Erfassen der Schwingungen während eines Ausschaltvorgangs der Messerwalzenvorrichtung 12 statt. Dabei wird die aktuelle Drehzahl von der Betriebsdrehzahl auf die Messdrehzahl geändert. Dazu wird die aktuelle Drehzahl beim Erreichen der einen oder mehreren Messdrehzahlen bzw. Messdrehzahlbereiche auf der jeweiligen Messdrehzahl gehalten und/oder es werden die Messdrehzahlbereiche durchfahren, sodass der Sensor 14 die Schwingungen erfassen kann. Nach Abschluss der Messung setzt die Messerwalzenvorrichtung 12 mit dem Herunterfahren der Drehzahl fort. Diese Ausgestaltung ist insbesondere dann vorteilhaft, wenn die Messdrehzahl unterhalb der Betriebsdrehzahl liegt, weil dadurch die Messung während des Herunterfahrens der Drehzahl erledigt werden kann, wobei das Herunterfahren im Wesentlichen nur durch die Messdauer verlängert wird.

In wiederum anderen Ausführungsformen wird ein Messvorgang sowohl während eines Einschaltvorgangs der Messerwalzenvorrichtung 12 als auch während eines Ausschaltvorgangs vorgenommen.

In einigen Ausführungsformen werden die Diagnosedaten in einer Analyseeinrichtung 19 ausgewertet. Dazu vergleicht die Analyseeinrichtung 19 die vorliegenden Diagnosedaten mit Diagnosedaten gleichartiger, funktionstüchtiger Messerwalzenvorrichtungen 12, die als Referenz dienen. In Abhängigkeit der Größe der Differenz zwischen den vorliegenden Diagnosedaten und den Referenz-Diagnosedaten kann die Analyseeinrichtung 19 einen Verschleißzustand des zugeordneten Lagers 26, 28 angeben. In manchen Ausführungsformen ist die Analyseeinrichtung 19 ein Teil des Systems 10.

Falls der Sensor 14 zum gleichzeitigen Erfassen von Schwingungen mehrerer Einzellager 26, 28 vorgesehen ist, bestimmt die Analyseeinrichtung 19 in einigen Ausführungsformen den Verschleißzustand der Gesamtheit der mehreren Einzellager 26, 28, ohne eine Zuordnung vorzunehmen, wie der Verschleißzustand der einzelnen der mehreren Einzellager 26, 28 gegeben ist. Wiederum in anderen Ausführungsformen wertet die Analyseeinrichtung 19 auf Basis der Diagnosedaten den Verschleißzustand der einzelnen Lager 26, 28 aufgrund der unterschiedlichen Schwingungscharakteristiken der Einzellager aus.

In einigen Ausführungsformen ist die Analyseeinrichtung 19 mit der Verarbeitungseinrichtung 16 verbunden und ist dabei in manchen Ausführungsformen Teil der Messerwalzenvorrichtung 12. In anderen Ausführungsformen ist die Analyseeinrichtung 19 Teil der Verarbeitungseinrichtung 16. In wiederum anderen Ausführungsformen ist die Analyseeinrichtung 19 Teil eines Wartungssystems, das die Diagnosedaten unabhängig von der Messerwalzenvorrichtung 12, dem System 10 oder dem Kunststoffstranggranulator 30 auszuwerten vermag.

Die Speichereinrichtung 18 ist mit der Verarbeitungseinrichtung 16 galvanisch oder drahtlos verbunden und speichert die von der Verarbeitungseinrichtung 16 bereitgestellten Diagnosedaten, die anschließend oder auch erst viel später, nämlich z.B. nach einem Ausbau der Messerwalzenvorrichtung, zur Analyseeinrichtung 19 übertragen werden. In einigen Ausführungsformen speichert die Speichereinrichtung 18 auch die von einer gegebenenfalls vorhandenen Analyseeinrichtung 19 ausgewerteten Diagnosedaten (siehe Pfeil X₂ in Fig. 1). In anderen Ausführungsformen speichert die Speichereinrichtung 18 die von der Analyseeinrichtung 19 ausgewerteten Diagnosedaten ohne separate Speicherung der zugrundeliegenden Diagnosedaten (siehe Pfeile X₁ und X₂ in Fig. 1). Im Zuge der Speicherung der Diagnosedaten kann die Speichereinrichtung 18 in einigen Ausführungsformen auch den Zeitpunkt der Messung und/oder eine Identifikation der verwendeten Messmethode speichern, sodass eine Historie der Diagnosedaten abrufbar ist.

Die Speichereinrichtung 18 kann in einigen Ausführungsformen über eine Maschinenschnittstelle zu einem externen Datenspeicher verfügen und dadurch die zu speichernden Diagnosedaten an der Maschinenschnittstelle bereitstellen. Die Maschinenschnittstelle der Speichereinrichtung 18 kann beispielsweise eine USB-Schnittstelle, eine Netzwerkschnittstelle (z.B. Ethernet) oder eine Datenspeicherschnittstelle (z.B. Serial ATA) sein. Die Maschinenschnittstelle der Speichereinrichtung 18 kann einen internen Datenspeicher der Speichereinrichtung 18 ersetzen, sodass während eines Messvorganges ein Datenspeicher mit der Maschinenschnittstelle der Speichereinrichtung 18 verbunden sein muss. In einem anderen Ausführungsbeispiel kann die Maschinenschnittstelle der Speichereinrichtung 18 den internen Datenspeicher ergänzen, sodass Diagnosedaten vom internen Datenspeicher auf den externen, an der Maschinenschnittstelle angeschlossenen Datenspeicher übertragen werden können.

In einigen Ausführungsformen verfügt die Verarbeitungseinrichtung 16 und/oder die Analyseeinrichtung 19 über eine Maschinenschnittstelle, die zur Konfiguration dieser Einrichtungen vorgesehen sind, insbesondere zum Einspielen von Referenz-Diagnosedaten oder zum Festlegen von Messprofilen, in denen Messdauer, Messdrehzahlen und Messzeitpunkte definiert sind. Die Maschinenschnittstelle der Verarbeitungseinrichtung 16 und/oder der Analyseeinrichtung 19 ist ferner zum Einspielen und Auslesen der Firmware dieser Einrichtungen vorgesehen.

In einigen Ausgestaltungen, in denen das System eine Analyseeinrichtung 19 umfasst, ist eine Anzeigeeinrichtung vorgesehen, die den Anwender über den Verschleißzustand bzw. einen Lagerschaden informiert.

In Fig. 2 ist ein Kunststoffstranggranulator 30 gezeigt, in dem ein erfindungsgemäßes System 10 mit der Messerwalzenvorrichtung 12 zur Anwendung kommt. Ein Kunststoffstrang 40 wird zwischen einer unteren Einzugswalze 32 und einer oberen Einzugswalze 34 geführt. Die beiden Einzugswalzen 32, 34 ziehen den Strang 40 in den Kunststoffstranggranulator 30 hinein und führen ihn zu einem System 10, das die Messerwalzenvorrichtung 12 aus Figur 1 mit rotierender Messerwalze 20 umfasst. Die Messerwalze 20 arbeitet mit einem auf einem Träger 38 befestigten Amboßmesser 36 zusammen, die gemeinsam den Strang zu Granulat 42 granulieren.

Die Erfindung betrifft auch ein Verfahren zum Bereitstellen von Diagnosedaten betreffend die Messerwalzenvorrichtung 12 eines Kunststoffstranggranulators 30. Dieses Verfahren wird mit einem System 10 nach einem der beschriebenen Ausführungsbeispiele oder einer Kombination daraus ausgeführt.

Das Auslösen eines Messvorgangs zum erfindungsgemäßen Bereitstellen von Diagnosedaten erfolgt in einigen Ausführungsformen durch einen Anwender des Kunststoffstranggranulators 30, beispielsweise durch Betätigen einer Schalteinrichtung des Kunststoffstranggranulators 30. Die Schaltvorrichtung ist beispielsweise mit der Steuereinrichtung 11 verbunden, welche, nach dem Betätigen der Schaltvorrichtung, das Erfassen der Schwingung durch den Sensor 14 in der vorstehend beschriebenen Weise initiiert.

In anderen Ausführungsformen erfolgt das Auslösen eines Messvorgangs automatisch, beispielsweise initiiert durch die Steuereinrichtung 11, bei einem Ausschalt- und/oder Einschaltvorgang der Messerwalzenvorrichtung 12. In einigen Ausführungsformen erfolgt ein Auslösen des Messvorgangs frühestens nach einer vorgegebenen Anzahl von Betriebsstunden. Auch dieses Auslösen kann durch die Steuereinrichtung 11 gesteuert werden. Da die Messung nur im Leerlauf der Messerwalze 20 vorgenommen werden soll, wird die Messung idealerweise beim nächsten Ausschalt- bzw. Einschaltvorgang vorgenommen.

Sobald der Messvorgang ausgelöst worden ist, werden die vom Sensor 14 erfassten Schwingungssignale erfasst und von der Verarbeitungseinheit 16 in Diagnosedaten gewandelt, die in der Speichereinrichtung 18 gespeichert werden. Dadurch sind Diagnosedaten, die auf den Zustand der Lager 26, 28 schließen lassen, in der Speichereinrichtung 18 verfügbar.

In manchen Ausführungsformen wird der Anwender des Kunststoffstranggranulators 30 über den Verschleißzustand der Lager 26, 28 der Messerwalzenvorrichtung 12 informiert, falls das System 10 über eine Analyseeinrichtung 19 und eine Anzeigeeinrichtung verfügt. Falls der festgestellte Verschleißzustand jenseits eines vorgegebenen Grenzwertes liegt, wird ein Lagerschaden angenommen, und der Anwender wird entsprechend informiert.

In einigen Ausführungsformen hat der Anwender oder ein Wartungsdienst Zugriff auf die Maschinenschnittstelle der Speichereinrichtung 18 bzw. der Verarbeitungseinrichtung 16 und wertet die Diagnosedaten über eine externe Analyseeinrichtung 19 aus. Die externe Analyseeinrichtung 19 kann auch als Programm auf einem Computer ausgestaltet sein, das auf einem Computer-lesbaren Medium oder in einem Signal gespeichert ist.

In aller Regel erfolgt ein Ausbau der Messerwalzenvorrichtung 12 aus dem Kunststoffstranggranulator 30 zu Wartungszwecken. Dies erfolgt in regelmäßigen Abständen zum Nachschleifen oder Tauschen der Messer. Im Zuge der Wartung der Messerwalze 20 werden die Diagnosedaten ausgewertet. Falls der festgestellte Verschleißzustand jenseits eines vorgegebenen Grenzwertes liegt, wird ein Lagerschaden im Messerwalzenlager 23 angenommen. In diesem Fall wird zumindest das betroffene Einzellager 26, 28 repariert oder ersetzt.

## Patentansprüche

1. System, umfassend eine Messerwalzenvorrichtung (12) eines Kunststoffstranggranulators (30) mit einer Messerwalze (20) und mit mindestens einem Messerwalzenlager (23), umfassend
mindestens einen Sensor (14) zum Erfassen von Schwingungen des mindestens einen Messerwalzenlagers (23) der Messerwalze (20) in Form von Schwingungssignalen und
eine Verarbeitungseinrichtung (16) zum Wandeln der Schwingungssignale in Diagnosedaten und zum Speichern der Diagnosedaten in einer Speichereinrichtung (18), sodass die Diagnosedaten nach einem Ausbau der Messerwalzenvorrichtung aus dem Kunststoffstranggranulator (30) bei einer Wartung der Messerwalze (20) zur Verfügung stehen,
**dadurch gekennzeichnet, dass**
das System (10) dazu eingerichtet, die Schwingungen des mindestens einen Messerwalzenlagers (23) der Messerwalze (20) mittels des mindestens einen Sensors (14) im Leerlauf der Messerwalze (20) zu erfassen und als die Diagnosedaten zu speichern.

2. System nach Anspruch 1,
wobei die Speichereinrichtung (18) ein Teil der Messerwalzenvorrichtung (12) ist.

3. System nach einem der Ansprüche 1 oder 2,
wobei das System (10) eingerichtet ist, die Schwingungen bei einer oder mehreren definierten Messdrehzahlen oder Messdrehzahlbereichen der Messerwalze (20) zu erfassen, die unter einer vorhergehenden oder anschließenden Betriebsdrehzahl liegen.

4. System nach Anspruch 3,
wobei das System eingerichtet ist, die Schwingungen während des Ein- oder Ausschaltvorgangs der Messerwalzenvorrichtung (12) zu erfassen.

5. System nach einem der Ansprüche 1 bis 4,
wobei das mindestens eine Messerwalzenlager (23) ein Lagergehäuse umfasst, an dem der mindestens eine Sensor (14) angeordnet ist.

6. System nach einem der Ansprüche 1 bis 5,
wobei das mindestens eine Messerwalzenlager (23) eine Mehrzahl unterschiedlicher Einzellager, vorzugsweise ein Radiallager (26) und ein Axiallager (28), in einem gemeinsamen Lagergehäuse umfasst und
wobei ein Sensor (14) zum Erfassen der Schwingungen der unterschiedlichen Einzellager (26, 28) vorgesehen ist.

7. System nach einem der Ansprüche 1 bis 6, ferner umfassend eine Analyseeinrichtung (19), die dazu eingerichtet ist, die Diagnosedaten durch Vergleichen mit Referenz-Diagnosedaten auszuwerten.

8. System nach Anspruch 6, ferner umfassend eine Analyseeinrichtung (19), die dazu eingerichtet ist, die Diagnosedaten durch Vergleichen mit Referenz-Diagnosedaten auszuwerten, wobei das Auswerten in Bezug auf einzelne der unterschiedlichen Einzellager (26, 28) erfolgt.

9. Verfahren zum Bereitstellen von Diagnosedaten für Wartungszwecke betreffend eine Messerwalzenvorrichtung (12) eines Kunststoffstranggranulators (30), wobei die Messerwalzenvorrichtung (12) eine Messerwalze (20) und mindestens ein Messerwalzenlager (23) umfasst und wobei das Verfahren die folgenden Schritte umfasst:
Erfassen von Schwingungen des mindestens einen Messerwalzenlagers (23) der Messerwalze (20) in Form von Schwingungssignalen mittels mindestens eines Sensors (14) der Messerwalzenvorrichtung (12) im Leerlauf der Messerwalze,
Wandeln der im Leerlauf erfassten Schwingungssignale in Diagnosedaten und
Speichern dieser Diagnosedaten mittels einer Verarbeitungseinrichtung (16) der Messerwalzenvorrichtung (12) derart, dass die Diagnosedaten nach einem Ausbau der Messerwalzenvorrichtung (12) aus dem Kunststoffstranggranulator (30) bei einer Wartung der Messerwalze (20) zur Verfügung stehen.

10. Verfahren nach Anspruch 9,
wobei die Diagnosedaten in einer Speichereinrichtung (18) gespeichert werden, die ein Teil der Messerwalzenvorrichtung (12) ist.

11. Verfahren nach Anspruch 9 oder 10, umfassend den folgenden weiteren Schritt:
Vergleichen der gespeicherten Diagnosedaten mit Referenz-Diagnosedaten zum Feststellen eines Verschleißzustandes des mindestens einen Messerwalzenlagers (23).

12. Verfahren nach Anspruch 9 oder 10, umfassend die folgenden weiteren Schritte:
Ausbauen der Messerwalzenvorrichtung (12) aus dem Kunststoffstranggranulator (30) zur Wartung der Messerwalze (20),
Warten der Messerwalze (20),
Feststellen eines Verschleißzustandes des mindestens einen Messerwalzenlagers (23) durch Vergleichen der gespeicherten Diagnosedaten mit Referenz-Diagnosedaten und
Auswechseln oder Reparieren des mindestens einen Messerwalzenlagers (23), wenn der festgestellte Verschleißzustand jenseits eines vorgegebenen Grenzwerts liegt.

13. Verfahren nach einem der Ansprüche 9 bis 12,
wobei die Schwingungen bei einer oder mehreren definierten Messdrehzahlen oder Messdrehzahlbereichen der Messerwalze (20) erfasst werden, die unter einer vorhergehenden oder anschließenden Betriebsdrehzahl liegen.

14. Verfahren nach Anspruch 13,wobei das Erfassen der Schwingungen während des Ein- oder Ausschaltvorgangs der Messerwalzenvorrichtung (12) erfolgt.

15. Verfahren nach einem der Ansprüche 9 bis 14,
wobei das mindestens eine Messerwalzenlager (23) eine Mehrzahl unterschiedlicher Einzellager, vorzugsweise ein Radiallager (26) und ein Axiallager (28), in einem gemeinsamen Lagergehäuse umfasst und
wobei ein Sensor (14) zum Erfassen von Schwingungen der unterschiedlichen Einzellager (26, 28) vorgesehen ist.

## Claims

1. A system comprising a knife roller apparatus (12) of a plastic strand pelletizer (30) with a knife roller (20) and with at least one knife roller bearing (23), comprising
at least one sensor (14) for detecting vibrations of the at least one knife roller bearing (23) of the knife roller (20) in the form of vibration signals and
a processing device (16) for converting the vibration signals into diagnostic data and for storing the diagnostic data in a memory device (18), so that the diagnostic data are available after a removal of the knife roller apparatus from the plastic strand pelletizer (30) upon a servicing of the knife roller (20), **characterized in that**
the system (10) is adapted to detect the vibrations of the at least one knife roller bearing (23) of the knife roller (20) in the idling of the knife roller (20) by means of the at least one sensor (14) and to store them as the diagnosis data.

2. The system according to claim 1, wherein the memory device (18) forms part of the knife roller apparatus (12).

3. The system according to any of the claims 1 or 2, wherein the system (10) is adapted to detect the vibrations at one or more defined measuring rotational speeds or measuring rotational speed ranges of the knife roller (20) which are below a preceding or subsequent operating rotational speed.

4. The system according to claim 3, wherein the system is adapted to detect the vibrations during the start-up or shutdown cycle of the knife roller apparatus (12).

5. The system according to any of the claims 1 to 4, wherein the at least one knife roller bearing (23) comprises a bearing housing on which the at least one sensor (14) is arranged.

6. The system according to any of the claims 1 to 5,
wherein the at least one knife roller bearing (23) includes a plurality of different single bearings, preferably a radial bearing (26) and an axial bearing (28) in a common bearing housing and
wherein a sensor (14) is provided for detecting the vibrations of the different single bearings (26, 28).

7. The system according to any of the claims 1 to 6, further comprising an analysis device (19) which is adapted to evaluate the diagnostic data by comparison with reference diagnostic data.

8. The system according to claim 6, further comprising an analysis device (19) which is adapted to evaluate the diagnostic data by comparison with reference diagnostic data, wherein the evaluation is effected with reference to individual ones of the different single bearings (26, 28).

9. A method for making available diagnostic data for servicing purposes concerning a knife roller apparatus (12) of a plastic strand pelletizer (30), wherein the knife roller apparatus (12) includes a knife roller (20) and at least one knife roller bearing (23) and wherein said method includes the following steps of:
detecting vibrations of the at least one knife roller bearing (23) of the knife roller (20) in the idling of the knife roller in the form of vibration signals by means of at least one sensor (14) of the knife roller apparatus (12),
converting the vibration signals detected in the idling into diagnostic data and
storing these diagnostic data by means of a processing device (16) of the knife roller apparatus (12) in such a fashion that the diagnostic data are available after a removal of the knife roller apparatus (12) from the plastic strand pelletizer (30) upon a servicing of the knife roller (20).

10. The method according to claim 9,
wherein the diagnosis data are stored in a memory device (18), which forms part of the knife roller apparatus (12).

11. The method according to claim 9 or 10, comprising the further step of:
comparing the stored diagnostic data with reference diagnostic data for determining a condition of wear of the at least one knife roller bearing (23).

12. The method according to claim 9 or 10, comprising the further steps of:
removing the knife roller apparatus (12) from the plastic strand pelletizer (30) for the servicing of the knife roller (20),
determining a state of wear of at the least one knife roller bearing (23) by comparing the stored diagnostic data with reference diagnostic data and
replacing or repairing the at least one knife roller bearing (23) when the determined condition of wear is beyond a predetermined limit.

13. The method according to any of the claims 9 to 12, wherein the vibrations at one or a plurality of defined measuring rotational speeds or measuring rotational speed ranges of the knife roller (20) are detected which are below a previous or subsequent operating rotational speed.

14. The method according to claim 13, wherein the detecting of the vibrations is effected during the start-up or shutdown cycle of the knife roller apparatus (12).

15. The method according to any of the claims 9 to 14,
wherein the at least one knife roller bearing (23) includes a plurality of different single bearings, preferably a radial bearing (26) and an axial bearing (28) in a common bearing housing and
wherein a sensor (14) is provided for detecting vibrations of the different single bearings (26, 28).

## Revendications

1. Système comprenant un dispositif de rouleau à couteaux (12) d'un granulateur de boudins en matière plastique (30) ayant un rouleau à couteaux (20) et ayant au moins un palier de rouleau à couteaux (23), comprenant
au moins un capteur (14) destiné à saisir des vibrations du au moins un palier de rouleau à couteaux (23) du rouleau à couteaux (20) sous forme de signaux de vibration, et
un équipement de traitement (16) destiné à la conversion des signaux de vibration en données de diagnostic et à la mémorisation des données de diagnostic dans un équipement de mémorisation (18), de telle sorte que les données de diagnostic, après un démontage du dispositif de rouleau à couteaux du granulateur de boudins en matière plastique (30), sont disponibles lors d'une opération de maintenance du rouleau à couteaux (20),
**caractérisé en ce que**
le système (10) est conçu pour saisir les vibrations du au moins un palier de rouleau à couteaux (23) du rouleau à couteaux (20), au moyen du au moins un capteur (14), au point mort du rouleau à couteaux (20), et pour mémoriser lesdites vibrations en tant que les données de diagnostic.

2. Système selon la revendication 1,
l'équipement de mémorisation (18) étant une partie du dispositif de rouleau à couteaux (12).

3. Système selon une des revendications 1 ou 2,
le système (10) étant conçu pour saisir les vibrations à une ou plusieurs vitesses de rotation de mesure ou plages de vitesses de rotation de mesure définies du rouleau à couteaux (20) situées en-dessous d'une vitesse de rotation de fonctionnement antérieure ou ultérieure.

4. Système selon la revendication 3,
le système étant conçu pour saisir les vibrations pendant le processus de démarrage ou d'arrêt du dispositif de rouleau à couteaux (12).

5. Système selon une des revendications de 1 à 4,
le au moins un palier de rouleau à couteaux (23) comprenant un logement de palier sur lequel le au moins un capteur (14) est agencé.

6. Système selon une des revendications de 1 à 5,
le au moins un palier de rouleau à couteaux (23) comprenant une pluralité de différents paliers individuels, de préférence un palier radial (26) et un palier axial (28), dans un logement de palier commun, et
un capteur (14) étant prévu pour la saisie des vibrations des différents paliers individuels (26, 28).

7. Système selon une des revendications de 1 à 6, comprenant en outre un équipement d'analyse (19) conçu pour évaluer les données de diagnostic en les comparant avec des données de diagnostic de référence.

8. Système selon la revendication 6, comprenant en outre un équipement d'analyse (19) conçu pour évaluer les données de diagnostic en les comparant avec des données de diagnostic de référence, l'évaluation ayant lieu en rapport avec certains des différents paliers individuels (26, 28).

9. Procédé de mise à disposition de données de diagnostic à des fins de maintenance concernant un dispositif de rouleau à couteaux (12) d'un granulateur de boudins en matière plastique (30), le dispositif de rouleau à couteaux (12) comprenant un rouleau à couteaux (20) et au moins un palier de rouleau à couteaux (23), et le procédé comprenant les étapes suivantes:
saisie de vibrations du au moins un palier de rouleau à couteaux (23) du rouleau à couteaux (20), sous forme de signaux de vibration, au moyen d'au moins un capteur (14) du dispositif de rouleau à couteaux (12), au point mort du rouleau à couteaux,
conversion des signaux de vibration, saisis au point mort, en données de diagnostic, et
mémorisation de ces données de diagnostic au moyen d'un équipement de traitement (16) du dispositif de rouleau à couteaux (12), de telle sorte que les données de diagnostic , après un démontage du dispositif de rouleau à couteaux (12) du granulateur de boudins en matière plastique (30), sont disponibles lors d'une opération de maintenance du rouleau à couteaux (20).

10. Procédé selon la revendication 9,
les données de diagnostic étant mémorisées dans un équipement de mémorisation (18) qui est une partie du dispositif de rouleau à couteaux (12).

11. Procédé selon la revendication 9 ou 10, comprenant l'étape suivante supplémentaire:
comparaison des données de diagnostic mémorisées avec des données de diagnostic de référence afin de dépister un état d'usure du au moins un palier de rouleau à couteaux (23).

12. Procédé selon la revendication 9 ou 10, comprenant les étapes suivantes supplémentaires:
démontage du dispositif de rouleau à couteaux (12) du granulateur de boudins en matière plastique (30) pour la maintenance du rouleau à couteaux (20),
opération de maintenance du rouleau à couteaux (20),
dépistage d'un état d'usure du au moins un palier de rouleau à couteaux (23) par comparaison des données de diagnostic mémorisées avec des données de diagnostic de référence, et
remplacement ou réparation du au moins un palier de rouleau à couteaux (23) si l'état d'usure dépisté se situe au-delà d'une valeur limite prédéterminée.

13. Procédé selon une des revendications de 9 à 12,
les vibrations étant saisies à une ou plusieurs vitesses de rotation de mesure ou plages de vitesses de rotation de mesure définies du rouleau à couteaux (20) situées en-dessous d'une vitesse de rotation de fonctionnement antérieure ou ultérieure.

14. Procédé selon la revendication 13, la saisie des vibrations ayant lieu pendant le processus de démarrage ou d'arrêt du dispositif de rouleau à couteaux (12).

15. Procédé selon une des revendications de 9 à 14,
le au moins un palier de rouleau à couteaux (23) comprenant une pluralité de différents paliers individuels, de préférence un palier radial (26) et un palier axial (28), dans un logement de palier commun, et
un capteur (14) étant prévu pour la saisie de vibrations des différents paliers individuels (26, 28).
